# EUROPEAN PATENT SPECIFICATION

(11) **EP 1 443 194 B1**
(45) Date of publication and mention of the grant of the patent: **22.06.2011**
(21) Application number: 04011112.2
(22) Date of filing: 09.03.1998
(51) Int. Cl.: F02D 35/02, F02M 45/04, F02D 41/14, F02D 41/34, F02D 41/40

(54) **Fuel injection controller for diesel engines**
Vorrichtung zur Regelung der Kraftstoffeinspritzung für Dieselmotoren
Commande d'injection de carburant pour moteurs diesel

(30) Priority: 10.03.1997 JP 5491897
(43) Date of publication of application: 04.08.2004
(62) Divisional of application: 98104176.7
(73) Proprietor: Toyota Jidosha Kabushiki Kaisha, Toyota-shi, Aichi-ken, 471-8571 (JP)
(72) Inventor: Sugiyama, Tatsumasa, Toyota-shi Aichi-ken 471-8571 (JP)
(74) Representative: TBK

(56) References cited:
- EP-A- 0 358 419
- DE-A- 4 326 950
- GB-A- 2 286 888
- US-A- 4 825 373
- US-A- 5 121 724
- PATENT ABSTRACTS OF JAPAN vol. 012, no. 222 (M-712), 24 June 1988 (1988-06-24) & JP 63 018156 A (NIPPON DENSO CO LTD), 26 January 1988 (1988-01-26)
- PATENT ABSTRACTS OF JAPAN vol. 009, no. 011 (M-351), 18 January 1985 (1985-01-18) & JP 59 160046 A (NIPPON DENSO KK), 10 September 1984 (1984-09-10)

## Description

### TECHNICAL FIELD TO WHICH THE INVENTION BELONGS

The present invention relates to fuel injection controllers for diesel engines, and more particularly, to apparatuses that controls fuel injection based on ion currents produced during the combustion of fuel.

### RELATED BACKGROUND ART

A typical diesel engine installed in automobiles has a plurality of reciprocal pistons that are housed in a cylinder block. Each piston is connected to a crankshaft (output shaft) of the engine by a connecting rod. The connecting rod converts the reciprocation of each piston to rotation of the crankshaft. A cylinder head is arranged on the cylinder block to define a combustion chamber between the head of each piston and the cylinder head. An intake manifold and an exhaust manifold, which communicate with each combustion chamber, extend through the cylinder head. A fuel injector is provided for each combustion chamber in the cylinder head. The fuel injector injects fuel into the associated combustion chamber.

During the intake stroke of each piston, air is drawn into the associated combustion chamber by way of the intake manifold. During the compression stroke, the piston moves from its bottom dead center to its top dead center. This compresses the air in the combustion chamber. During the final stage of the compression stroke, the fuel injector injects atomized fuel into the combustion chamber. The heat produced by the compression of air ignites and burns the fuel. This forces the piston toward the bottom dead center from the top dead center to perform the power stroke. In the exhaust stroke, the piston moves from the bottom dead center to the top dead center. This pushes the burned gases (exhaust gas) out of the combustion chamber and into the exhaust manifold.

In such a diesel engine, the ignition timing is varied by changing the injection timing. Thus, the ignition timing may be shifted to an optimal timing value by controlling the injection timing. Japanese Unexamined Patent Publication No. 59-160046 describes such a fuel injection timing controller for diesel engines.

The controller includes a glow plug for each combustion chamber. The glow plug also functions as an ion current detector. Ions are formed when fuel is burned in each combustion chamber. The ions produce electric current (ion current), which is detected by the associated glow plug. Signals corresponding to the detected current value are output from the glow plug. The controller also includes a crank sensor that detects a projection on the crankshaft. The crank sensor outputs a signal when detecting the projection. Thus, pulse signals are output from the crank sensor during rotation of the crankshaft.

The controller determines the ignition timing in each combustion chamber from the glow plug and crank sensor signals. The controller then optimizes the ignition timing by adjusting the injection timing. The injection timing control maintains satisfactory combustion in the combustion chamber and stabilizes the operation of the diesel engine.

In addition to the ignition timing, which varies in accordance with the injection timing, the fuel combustion time, which varies in accordance with the amount of injected fuel, influences the combustion state in each combustion chamber. Although the controller of the above publication controls the injection timing to optimize the ignition timing, the combustion time is not optimized. Prior Art EP-A-0 358 419 shows the control of the injection rate to optimize the combustion time. Therefore, the combustion state may be unsatisfactory due to an improper amount of fuel injection. This produces fumes in the exhaust gas and degrades engine emissions.

Different combustion times between different combustion chambers may also result in differing combustion states between combustion chambers. The different combustion states may vibrate the diesel engine and degrade the driving performance of the engine.

It is known that before the main injection of fuel, the injection of a small amount of fuel (pilot injection) into each combustion chamber improves the ignition of the fuel in diesel engines. However, if the fuel amount of the pilot injection is improper, the ignition timing becomes inappropriate. As a result, the combustion state in the combustion chamber may become unsatisfactory. Thus, improper pilot injection may also produce fumes and degrade fuel emissions.

Furthermore, if the fuel amount of the pilot injection differs between combustion chambers, the ignition timing may differ in each combustion chamber. This may lead to different combustion states between combustion chambers thus increasing the noise produced by the diesel engine.

### DISCLOSURE OF THE INVENTION

Accordingly, it is an objective of the present invention to provide a fuel injection controller for diesel engines that optimizes fuel injection and thus achieves a satisfactory combustion state in each combustion chamber.

To achieve the above objective, the present invention provides an apparatus for controlling a fuel injection amount in a diesel engine as defined in claim 1.

Other aspects and advantages of the present invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred examples together with the accompanying drawings in which:
Fig. 1 is a schematic drawing showing a diesel engine to which a first example of a fuel injection amount controller according to the present invention is applied;
Fig. 2 is an enlarged cross-sectional view showing the fuel injection structure of the engine of Fig. 1;
Fig. 3 is a block diagram showing the electric structure of the fuel injection amount controller;
Fig. 4 is a flowchart showing the fuel injection amount compensating routine of the first example;
Figs. 5(a) to 5(d) are timing charts showing the behavior of various elements with respect to the generated ion current;
Figs. 6(a) and 6(b) are timing charts showing the relationship between a pilot injection fuel amount and a fuel ignition timing;
Figs. 7(a) to 7(d) are timing charts showing the behavior of various elements with respect to the generated ion current in a second example of a fuel injection amount controller which is outside the scope of the present invention; and
Fig. 8 is a flowchart showing the fuel injection amount compensating routine of the second example.

### DESCRIPTION OF SPECIAL EMBODIMENTS

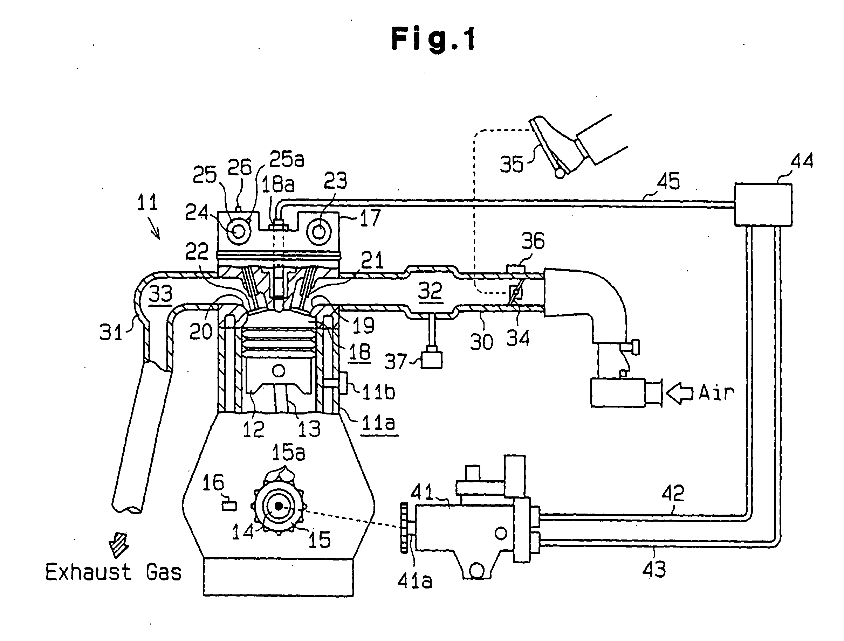

A first example of a fuel injection amount controller according to the present invention will now be described with reference to Figs. 1 to 5. The controller is applied to automobile diesel engines.

As shown in Fig. 1, a diesel engine 11 has a cylinder block 11a, which houses four reciprocal pistons 12 (only one shown in Fig. 1). Each piston 12 is connected to a crankshaft (output shaft) 14, which extends through the lower portion of the engine 11, by a connecting rod 13. The connecting rod 13 converts the reciprocation of each piston 12 to rotation of the crankshaft 14.

A crank signal rotor 15 is fitted to the crankshaft 14. A plurality of equally spaced projections 15a extend radially, with respect to the axis of the crankshaft 14, from the peripheral surface of the signal rotor 15. A crank sensor 16 facing the peripheral surface of the signal rotor 15 detects the projections 15a and outputs signals. As the crankshaft 14 rotates, the projections 15a successively pass by the crank sensor 16. As each projection 15a passes by, the crank sensor 16 outputs a pulse signal.

A coolant temperature sensor 11b is arranged on the cylinder block 11a to detect the temperature of the coolant flowing through the engine 11. A cylinder head 17 is mounted on the cylinder block 11a to define a combustion chamber 18 between the cylinder head 17 and each piston 12. A fuel injector 18a is provided for each combustion chamber 18 in the cylinder head 17. The fuel injector 18a injects fuel into the associated combustion chamber 18. An intake port 19 and an exhaust port 20 are provided for each combustion chamber 18 in the cylinder head 17. An intake valve 21 is arranged in each intake port 19, while an exhaust valve 22 is arranged in each exhaust port 20.

An intake cam shaft 23, which drives the intake valves 21, and an exhaust cam shaft 22, which drives the exhaust valves 24, are rotatably supported in the cylinder head 17. The intake and exhaust camshafts 23 are connected to the crankshaft 14 by a timing belt (not shown). Hence, the rotation of the crankshaft 14 is transmitted to the intake and exhaust camshafts 23, 24 by the timing belt. The rotation of the intake camshaft 23 opens and closes each intake valve 21 to selectively connect and disconnect the associated intake port 19 and combustion chamber 18. The rotation of the exhaust camshaft 24 opens and closes each exhaust valve 22 to selectively connect and disconnect the associated exhaust port 20 and combustion chamber 18.

A cam signal rotor 25 is attached to the exhaust camshaft 24. A single projection 25a projects from the peripheral surface of the signal rotor 25. A cam sensor 26 facing the peripheral surface of the signal rotor 25 detects the projection 25a and outputs a signal. As the camshaft 24 rotates, the projection 25a passes by the cam sensor 26. As each projection 25a passes by, the cam sensor 26 outputs a signal.

The intake ports 19 are connected to an intake manifold 30, while the exhaust ports 20 are connected to an exhaust manifold 31. The intake manifold 30 and the intake ports 19 define an intake passage 32. The exhaust manifold 31 and the exhaust ports 20 define an exhaust passage 33. A throttle valve 34 is located at the upstream portion of the intake passage 32. The angle of the throttle valve 34 is adjusted in accordance with the depression amount (or depression angle) of an acceleration pedal 35.

A throttle sensor 36 is located in the vicinity of the throttle valve 34 to detect the angle of the throttle valve 34 and outputs a corresponding signal. An intake pressure sensor 37 is located downstream of the throttle valve 34 in the intake manifold 30. The pressure sensor 37 detects the pressure in the intake passage 32 downstream of the throttle valve 34 and outputs a corresponding signal.

The crankshaft 14 is connected to a drive shaft 41a of a fuel injection pump 41. A pipe 42 and a pipe 43 are connected to the injection pump 41. The pipes 42, 43 lead to a fuel reservoir 44. The fuel reservoir 44 is connected to each fuel injector 18a by a fuel line 45.

When the rotation of the crankshaft 14 is transmitted to the drive shaft 41a of the injection pump 41, fuel is drawn into the pump 41a from a fuel tank (not shown). The injection pump 41 then forces the fuel toward the fuel reservoir 44 through the pipes 42, 43. The fuel collected in the fuel reservoir 44 is then sent to each fuel injector 18a through the associated fuel line. The fuel injector 18a then injects the fuel into the associated combustion chamber 18.

Fuel is injected into each combustion chamber 18 during the final stage of the compression stroke. The heat produced by the compression of air ignites and burns the fuel. This produces the drive force of the engine 11. The combustion products, or exhaust gases, are sent out through the exhaust passage 33.

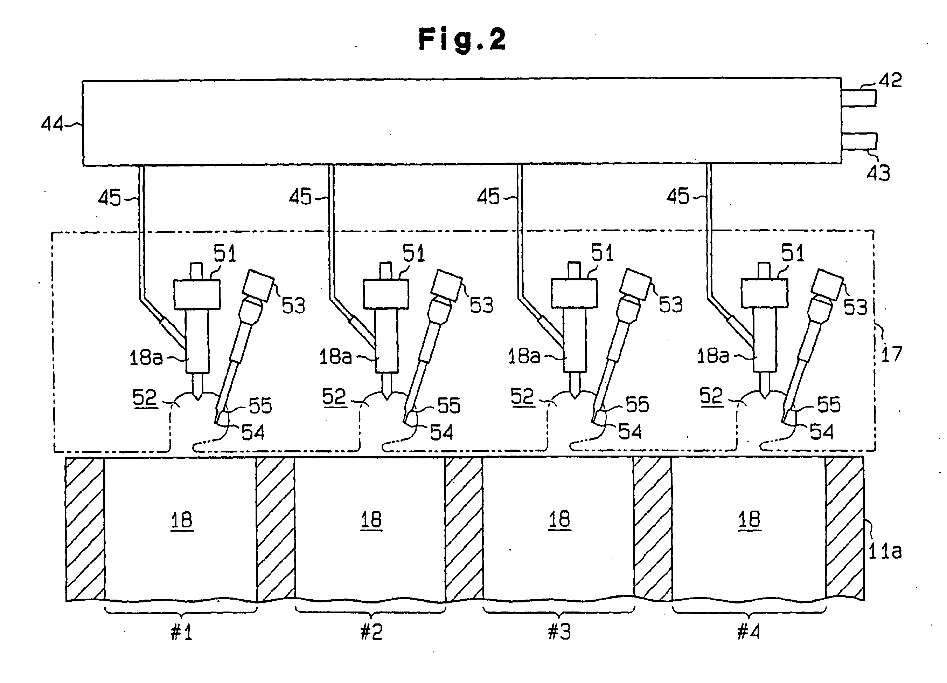

The fuel injection structure of the engine 11 will now be described with reference to Fig. 2. As shown in the drawing, the cylinder block 11a includes four cylinders (#1, #2, #3, #4). Each cylinder #1-#4 is provided with a combustion chamber 18 and a fuel injector 18a. A swirl chamber 52 is provided for each combustion chamber 18 in the cylinder head 17. The swirl chamber 52 is communicated with the associated combustion chamber 18. Each fuel injector 18a includes an electromagnetic solenoid 51. The fuel injector 18a is opened and closed by a needle (not shown) in accordance with the excitation and de-excitation of the electromagnetic solenoid 51. Thus, the opening and closing of the fuel injector 18a injects fuel intermittently. The fuel injector 18a injects fuel into the swirl chamber 52. The fuel is then burned and sent to the associated combustion chamber 18 from the swirl chamber 52.

A glow plug 53 is provided for each swirl chamber 52. A core 54 and a heater 55 are arranged at the distal end of each glow plug 53. The core 54 is made of a conductive material and used to detect ion current. The heater 55 is made of a nichrome wire (not shown). The core 54 and the heater 55 are insulated from each other and arranged in the swirl chamber 52. The core 54 and the heater 55 are also insulated from the wall of the swirl chamber 52. When the engine 11 is started, the heater 55 of the glow plug 55 heats the associated swirl chamber 52 to enhance combustion when fuel is injected into the swirl chamber 52. A predetermined voltage is applied to the core 54. The application of voltage generates ion current when ions are produced during combustion of the fuel in the combustion chamber 18 and the swirl chamber 52.

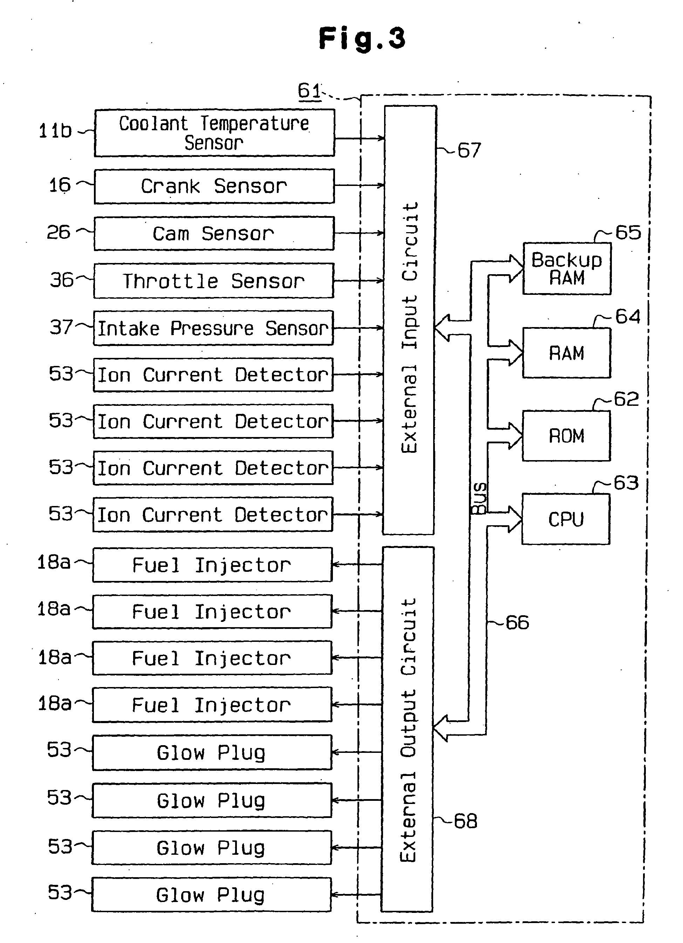

The electric structure of the fuel injection amount controller will now be described with reference to Fig. 3. The fuel injection amount controller has an electronic control unit (ECU) 61 to control the operating state of the engine 11. The ECU 61 is a logical operation circuit that includes a read only memory (ROM) 62, a central processing unit (CPU) 63, a random access memory (RAM) 64, and a backup RAM 65.

The ROM 62 is a memory that stores control programs and maps used to execute the control programs. The RAM 64 is a memory that temporarily stores the computations of the CPU 63 and the data sent from the sensors. The backup RAM 65 is a nonvolatile memory, which keeps data stored when the engine 11 is not running. The ROM 62, the CPU 63, the RAM 64, and the backup RAM 65 are connected to one another by a bus 66. The bus 66 is also connected to an external input circuit 67 and an external output circuit 68.

The external input circuit 67 is connected to the coolant temperature sensor 11b, the crank sensor 16, the cam sensor 26, the throttle sensor 36, the intake pressure sensor 37, and the ion current detectors 53 of the cylinder #1-#4. The external output circuit 68 is connected to the fuel injectors 18a and glow plugs 53 of the cylinders #1-#4.

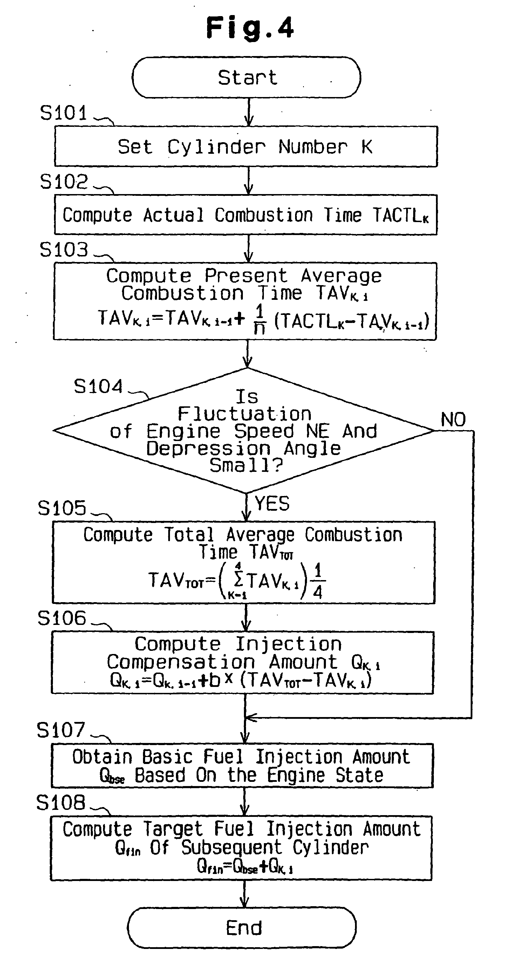

The control program executed by the ECU 61 will now be described with reference to the flowchart of Fig. 4. The flowchart illustrates a routine for computing the fuel injection amount. This routine is executed by the ECU 61 in an interrupting manner for every predetermined crank angle.

At step S101, the ECU 61 locates the cylinder in which fuel has just been injected based on the signals sent from the crank sensor 16 and the cam sensor 26. The ECU 61 then sets a cylinder number K that corresponds to the located cylinder. The ECU 61 sets K as one when determining that fuel has just been injected into cylinder #1. K is set to two when the located cylinder is #3, to three when the located cylinder is #4, and to four when the located cylinder is #2.

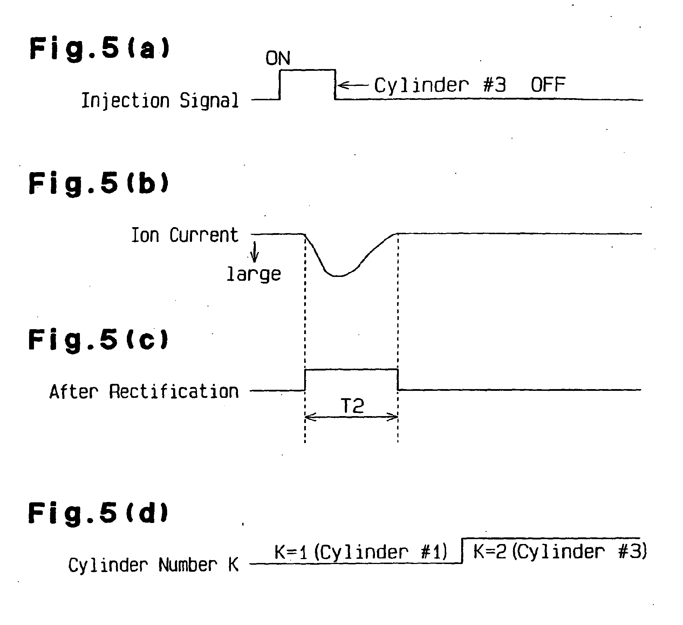

Fuel is injected in the order of cylinder #1, cylinder #3, cylinder #4, and cylinder #2. Thus, if fuel is being injected into cylinder #3 as shown in Fig. 5(a), K is changed from one, which corresponds to the cylinder #1, to two, which corresponds to the cylinder #3.

The ions produced during the combustion of the fuel generate ion current between the core 54 of the associated glow plug 53 and the wall of the swirl chamber 52, as shown in Fig. 5(b). The ion current is sent to the ECU 61 by the associated glow plug (ion current detector) 53. The ECU 61 rectifies the waveform of the ion current, as shown in Fig. 5 (c) .

The ECU 61 then proceeds to step S102 and computes the actual combustion time TACTL_{K} of the fuel based on the rectified waveform of the ion current. The actual combustion time TACTL_{K} varies in accordance with the amount of fuel injection.

At step S103, the ECU 61 determines the present cylinder average combustion time TAV_{K,i}. More specifically, the ECU 61 subtracts the previous average combustion time for that cylinder TAV_{K,i-1} from the actual combustion time TACTL_{K} obtained in step S102. The ECU 61 then divides the difference by n (n is a constant) and adds the previous average combustion time TAV_{K,i-1} to obtain the present cylinder average combustion time TAV_{K,i}. Lower case i is used herein to indicate the cycle number for a given cylinder. Thus, each time fuel is injected into a given cylinder, i increases by one.

If combustion takes place in a given cylinder for the first time (as when starting the engine 11), the ECU 61 uses the present actual combustion time TACTL_{K} for that cylinder as the previous cylinder average combustion time TAV_{K,i-1} to obtain the present cylinder average combustion time TAV_{K,i}. The ECU 61 then proceeds to step S104.

At step S104, the ECU 61 determines whether or not the fluctuation of the engine speed NE and the depression angle of the acceleration pedal 35 are small based on the signals sent from the crank sensor 16, the cam sensor 26, and the throttle sensor 36. If it is determined that the engine speed fluctuation and the depression angle fluctuation are small, the ECU 61 proceeds to step S105.

At step S105, the ECU 61 adds the most recent cylinder average combustion time TAV_{K,i} of each cylinder #1-#4 and divides the sum by the number of cylinders (in this case, four) to compute the total average combustion time TAV_{TOT}. The total average combustion time TAV_{TOT} is the average value of the average combustion time TAV_{K,i} for all cylinders #1-#4. Thus, the total average combustion time TAV_{TOT} remains within a desirable range even if the fuel injection amount in one cylinder causes the cylinder average combustion time TAV_{K,i} to fall outside the desired range. Accordingly, the ECU 61 sets the total average combustion time TAV_{TOT} as a target value. As the average combustion time TAV_{K,i} of each cylinder #1-#4 approaches the target value, the combustion state in the combustion chamber 18 of each cylinder #1-#4 improves.

After computing the total average combustion time TAV_{TOT}, the ECU 61 proceeds to step S106 and computes the compensation amount Q_{K,i} of the fuel injection amount in each cylinder #1-#4. The present compensation amount Q_{K,i} for the current cylinder is computed by subtracting the present cylinder average combustion time TAV_{K,i} from the total average combustion time TAV_{TOT}. The difference is multiplied by a predetermined value b and then added to the previous compensation amount Q_{K,i-1} for the same cylinder to obtain the present compensation amount Q_{K,i}. The present compensation amount Q_{K,i} will be used to compensate the fuel injection amount of the same cylinder in the next cycle (i+1). After computing the compensation amount Q_{K,i}, the ECU 61 proceeds to step S107.

The predetermined value b determines how much the difference between the total average combustion time TAV_{TOT} and the cylinder average combustion time TAV_{K,i} affects the compensation amount Q_{K,i}. If the predetermined value b is greater, the fuel injection compensation amount for the subsequent fuel injection increases in a sudden manner. If the predetermined value b is smaller, the fuel injection compensation amount for the subsequent fuel injection increases in a gradual manner. In the preferred example, the predetermined value b is set so that the fuel injection compensation amount does not increase in a relatively sudden manner.

If it is determined that the fluctuation of the engine speed NE and the depression angle is great in step S104, the ECU 61 skips steps S105, S106 and proceeds to step S107. In this case, the ECU 61 uses the previous compensation amount Q_{K,i-1} to compensate the amount of fuel injected into the current cylinder.

At step S107, the ECU 61 obtains a basic fuel injection amount Q_{bse} in correspondence with the operating state of the engine 11, which is based on characteristics such as the engine speed NE and the depression angle, by referring to a map stored in the ROM 62. The map is plotted in accordance with experimental results. The ECU 61 then proceeds to step S108 and computes the target fuel injection amount Q_{fin} for the next cylinder in the injection order. The target fuel injection amount Q_{fin} is computed by adding the compensation amount Q_{K,i}, which was obtained during the next cylinder's previous fuel injection, to the basic fuel injection amount Q_{bse}.

Fuel is injected into each cylinder #1-#4 in accordance with its target fuel injection amount Q_{fin}, which is computed as described above. Accordingly, the difference between the average combustion time TAV_{K,i} of each cylinder #1-#4 and the total average combustion time TAV_{TOT} is minimized. This prevents the average combustion time TAV_{K,i} from becoming inappropriate due to an improper amount of fuel injection. As a result, satisfactory combustion of fuel takes place in the combustion chamber 18 of each cylinder #1-#4. Since the difference between the average combustion time TAV_{K,i} of each cylinder #1-#4 and the total average combustion time TAV_{TOT} is minimized, the cylinder average combustion time TAV_{K,i} becomes substantially the same in each cylinder #1-#4. Consequently, the combustion states in all cylinders #1-#4 are substantially the same.

The advantages obtained in the first example will now be described.

When an improper amount of fuel is injected into a certain combustion chamber 18, the actual combustion time TACTL_{K}, which is computed based on the ion current sent from the associated glow plug (ion current detector) 53, becomes inappropriate. This causes the cylinder average combustion time TAV_{K,i}, which is computed from the actual combustion time TACTL_{K}, to become inappropriate. When this happens, the ECU 61 compensates the fuel injection amount for the next injection cycle to minimize the difference between the cylinder average combustion time TAV_{K,i} and the total average combustion time TAV_{TOT}. Accordingly, the compensation of the amount of fuel injection keeps the cylinder average combustion time TAV_{K,i} at an appropriate value and guarantees satisfactory combustion of fuel in the combustion chamber 18. As a result, the exhaust gas is free from fumes and engine emissions are improved.

The difference between the average combustion time TAV_{K,i} of each cylinder #1-#4 and the total average combustion time TAV_{TOT} is minimized. Thus, the cylinder average combustion time TAV_{K,i} becomes substantially the same in each cylinder #1-#4. Accordingly, the combustion state in each cylinder #1-#4 becomes substantially the same. This suppresses vibrations that would be produced by cylinders #1-#4 having different combustion states and enhances the driving performance of the engine 11.

The present fuel injection compensation amount Q_{K,i} s computed when the fluctuation of the engine speed NE and the depression angle of the acceleration pedal 35 is small, that is, when the engine 11 remains in the same operating state. Therefore, the present fuel injection compensation amount Q_{K,i} remains appropriate despite sudden changes in the operating state of the engine 11. The previous fuel injection compensation amount Q_{K,i-1} is used during the next fuel injection when the operating state of the engine 11 changes drastically. Thus, the fuel injection amount maintains an appropriate value.

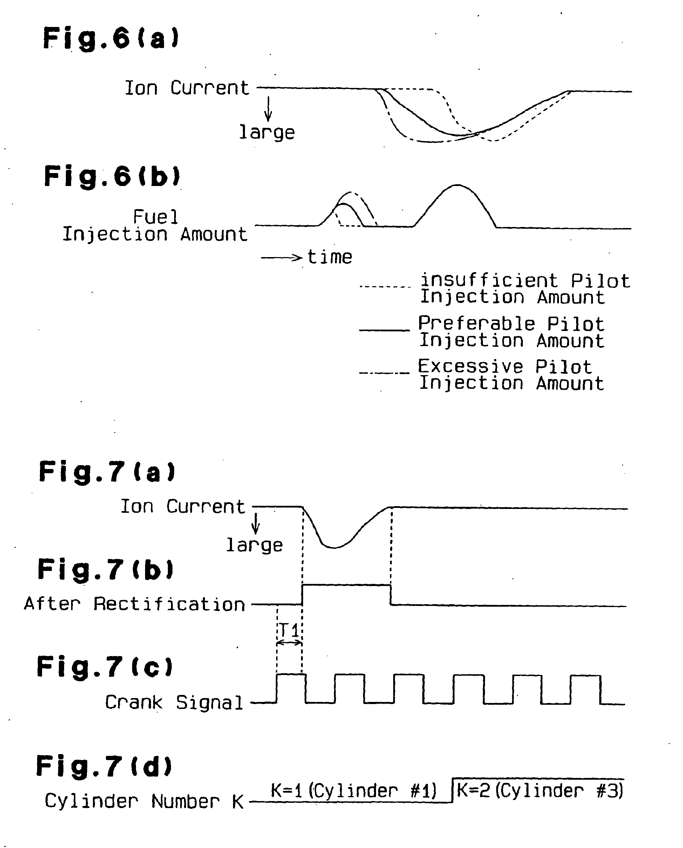

A second example of a fuel injection amount controller which is outside the scope of the present invention will now be described with reference to Figs. 6 to 8. This example differs from the first example in only the program executed by the ECU 61. Thus, like or identical corresponding components will be denoted with the same reference numeral and will not be described.

In the diesel engine 11 employed in this example, a small portion of the fuel injection amount is injected into each combustion chamber 18 before injecting the rest of the fuel injection amount. In other words, the engine 11 performs pilot injection to improve ignition of the main portion of the fuel injected (main injection) into the combustion chamber 18.

Figs. 6(a) and 6(b) illustrate changes in the ignition timing of the fuel injected into each combustion chamber 18 in correspondence with the pilot injection amount.

When the pilot injection amount is insufficient, as shown by the uniformly dashed line in Fig. 6(b), the ignition timing of fuel in each combustion chamber 18 is retarded. Thus, the timing at which ion current is generated between the core 54 of the associated glow plug 53 and the wall of the combustion chamber 18 is delayed from the desired timing, as shown by the uniformly dashed line in Fig. 6(a). If the pilot injection amount is excessive as shown by the line made up of long and short dashes in Fig. 6(b), the ignition timing is advanced. Hence, the ion current generation timing is advanced from the desired timing, as shown by the line made up of long and short dashes in Fig. 6(a). This relationship between the pilot injection amount and the ignition timing was confirmed through experiments by the inventors of the present invention.

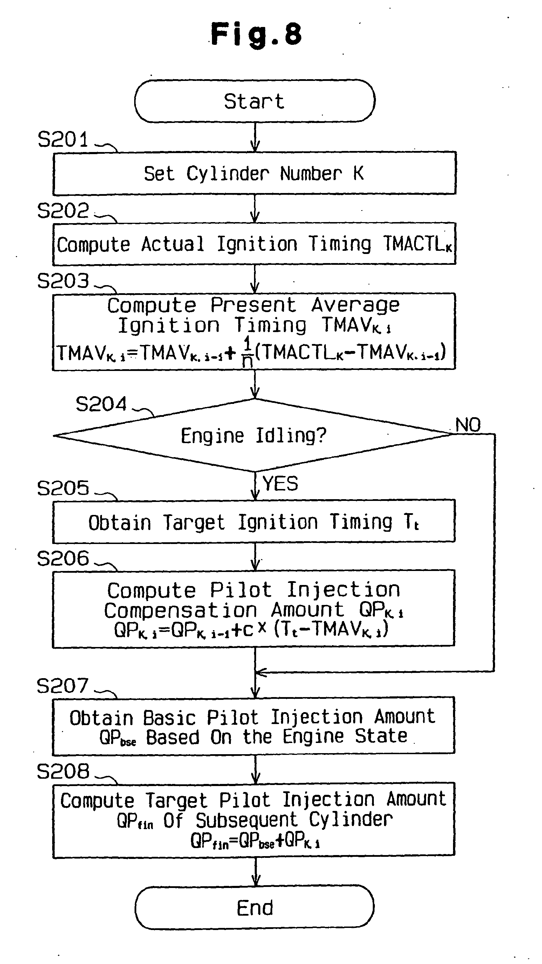

The control program executed by the ECU 61 in this example will now be described with reference to the flowchart of Fig. 8. The flowchart illustrates a routine for computing the pilot fuel injection amount. This routine is executed by the ECU 61 in an interrupting manner for every predetermined crank angle.

At step S201, the ECU 61 locates the cylinder in which main injection has just been performed. The ECU 61 then sets K, which corresponds to the located cylinder. The relationship between K and the cylinder number (#1-#4) is set the same way as in the first example. The order for performing injection in the cylinders #1-#4 is also the same as in the first example. Thus, if the main injection has just been performed in cylinder #3, K is changed from one, which corresponds to cylinder #1, to two, which corresponds to cylinder #3, as shown in Fig. 7(d).

The ions produced during the combustion of the fuel injected into cylinder #3 generate ion current between the core 54 of the associated glow plug 53 and the wall of the swirl chamber 52, as shown in Fig. 7(a). The ion current is sent to the ECU 61 by the associated glow plug (ion current detector) 53. The ECU 61 rectifies the waveform of the ion current, as shown in Fig. 7(b). The ECU 61 then proceeds to step S202 and computes the actual ignition timing TMACTL_{K} of the fuel in the current cylinder based on the rectified waveform of the ion current and the pulse signals from the crank sensor 16 (Fig. 7(c)). The actual ignition timing TMACTL_{K} varies in accordance with the pilot injection amount.

At step S203, the ECU 61 determines the present average ignition timing TMAV_{K,i} of the current cylinder. More specifically, the ECU 61 subtracts the previous average ignition timing TMAV_{K,i-1} of the current cylinder from the actual ignition timing TMACTL_{K}. The ECU 61 then divides the difference by n (n is a constant) and adds the previous average ignition timing TMAV_{K,i-1} to obtain the present average ignition timing TMAV_{K,i} of the current cylinder.

If combustion takes place in a cylinder for the first time (as when starting the engine 11), the ECU 61 uses the present actual ignition timing TMACTL_{K} as the previous average ignition timing TMAV_{K,i-1} to obtain the present average ignition timing TMAV_{K,i}. The ECU 61 then proceeds to step S204. At step 204, the ECU 61 determines whether or not the engine 11 is idling based on the signals sent from the crank sensor 16, the cam sensor 26, and the throttle sensor 36. If it is determined that the engine 11 is idling, the ECU 61 proceeds to step S205.

At step S205, the ECU 61 refers to a map, which is stored in the ROM 62, to obtain the target ignition timing Tₜ in correspondence with the engine speed NE and the depression angle of the acceleration pedal 35. The map is plotted in accordance with experimental results. The target ignition timing Tₜ is the timing that results in satisfactory combustion when fuel is ignited in the combustion chamber 18.

At step S206, the ECU 61 computes the compensation amount QP_{K,i} of the pilot fuel injection amount in each cylinder #1-#4. The present compensation amount QP_{K,i} for is computed by subtracting the present cylinder average ignition timing TMAV_{K,i} of the current cylinder from the target ignition timing Tₜ. The difference is multiplied by a predetermined value c and then added to the previous compensation amount QP_{K,i-1} to obtain the compensation amount QP_{K, i}. The present pilot injection compensation amount QP_{k,i} will be used to compensate the pilot injection amount of the current cylinder in the next cycle (i+1). After computing the pilot injection compensation amount QP_{K,i}, the ECU 61 proceeds to step S207.

The predetermined value c determines how much the difference between the target ignition timing Tₜ and the average ignition timing TMAV_{K,i} affects the compensation amount QP_{K,i}. If the predetermined value c is greater, the fuel injection compensation amount for the subsequent pilot injection increases in a sudden manner. If the predetermined value c is smaller, the fuel injection compensation amount for the subsequent pilot injection increases in a gradual manner. In a preferred example, the predetermined value c is set so that the pilot fuel injection compensation amount does not increase in a relatively sudden manner.

In step S204, if it is determined that the engine 11 is not idling, the ECU 61 skips steps S205, S206 and proceeds to step S207. In this case, the ECU 61 uses the previous compensation amount QP_{K,i-1} to compensate the amount of fuel injected into the current cylinder during pilot injection.

At step S207, the ECU 61 obtains the basic pilot injection amount QP_{bse} in correspondence with the operating state of the engine 11, which is determined by characteristics such as the engine speed NE and the depression angle, by referring to a map stored in the ROM 62. The map is plotted in accordance with experimental results. The ECU 61 then proceeds to step S208 and computes the target pilot injection amount QP_{fin} for the next cylinder in the injection order. The target fuel injection amount QP_{fin} is computed by adding the pilot injection compensation amount QP_{K,i} of the next cylinder obtained during the next cylinder's previous fuel injection to the basic pilot injection amount QP_{bse}.

Pilot injection is performed in each cylinder #1-#4 in accordance with its target pilot injection amount QP_{fin}, which is computed as described above. Accordingly, the difference between the average ignition timing TMAV_{K,i} and the target ignition timing Tₜ in each cylinder #1-#4 is minimized. This prevents the average ignition timing TMAV_{K,i} of each cylinder #1-#4 from becoming inappropriate due to an improper pilot injection amount. As a result, satisfactory combustion of fuel takes place in the combustion chamber 18 of each cylinder #1-#4. Since the difference between the average ignition timing TMAV_{K,i} and the target ignition timing Tₜ in each cylinder #1-#4 is minimized, the target ignition timing Tₜ is substantially the same in each cylinder #1-#4. Consequently, the combustion state in each cylinder #1-#4 is substantially the same.

The advantages obtained in the second example will now be described.

When the amount of fuel injected into a certain combustion chamber 18 during pilot injection is improper, the actual ignition timing TMACTL_{K}, which is computed based on the ion current sent from the associated glow plug (ion current detector) 53, becomes inappropriate. This causes the average ignition timing TMAV_{K,i}, which is computed from the actual ignition timing TMACTL_{K}, to become inappropriate. In this case, the ECU 61 compensates that cylinder's pilot injection amount during the next injection cycle to minimize the difference between the average ignition timing TMAV_{K,i} and the target ignition timing Tₜ. Accordingly, the compensation of the amount of pilot injection keeps the average ignition timing TMAV_{K,i} at an appropriate timing and guarantees satisfactory combustion of fuel in the combustion chamber 18. As a result, the exhaust gas is free from fumes and the engine emissions are improved.

The difference between the average ignition timing TMAV_{K,i} and the target ignition timing Tₜ is minimized in each cylinder #1-#4. Thus, the average ignition timing TMAV_{K,i} becomes substantially the same in each cylinder #1-#4. Accordingly, the combustion state in each cylinder #1-#4 becomes substantially the same. This suppresses noise that would be produced by differing cylinders #1-#4 having different combustion states.

The pilot injection compensation amount QP_{K,i} is computed when the engine 11 is idling, that is, when the engine 11 remains in the same operating state. Therefore, the pilot injection compensation amount Q_{K,i} is maintained at an appropriate value despite sudden changes in the operating state of the engine 11. A cylinder's previous pilot injection compensation amount QP_{K,i-1} is used during its next fuel injection when the operating state of the engine 11 changes drastically. Thus, the pilot injection amount is maintained at an appropriate value.

It should be apparent to those skilled in the art that the present invention may be embodied in many other specific forms without departing from the scope of the invention. More particularly, the present invention may be embodied as described below.

In the first and second examples, each glow plug 53 incorporates the function of an ion current detector. However, the ion current detector need not be incorporated in the glow plug 53 and may be provided separately from the glow plug 53.

In the first and second examples, the diesel engine 11, to which the present invention is applied, has four cylinders. However, the present invention may also be applied to a diesel engine having any number of cylinders.

In the first example, fuel injection amount compensation is carried out by setting the total average combustion time TAV_{TOT} as a target and minimizing the difference between the average combustion time TAV_{K,i} of each cylinder #1-#4 and the total average combustion time TAV_{TOT}. However, the fuel injection amount compensation may also be carried out by referring to a map to obtain a target combustion time that corresponds to the operating state of the engine 11. In this case, the target combustion time is used to compensate the fuel injection amount and minimize the difference between the target combustion time and the average combustion time TAV_{K,i} of each cylinder #1-#4.

In the first example, at step S104, the ECU 61 determines whether or not the fluctuation of the engine speed NE and the depression angle of the acceleration pedal 35 are small. If the engine speed fluctuation and the depression angle fluctuation are small, the ECU 61 computes the fuel injection compensation amount Q_{K,i}. However, the processing of step S104 may be eliminated so that the fuel injection compensation amount Q_{K,i} is computed regardless of the engine speed NE or the depression angle. In this case, since step S104 need not be executed, the burden on the ECU 61 is reduced.

In the second example, at step S204, the ECU 61 determines whether or not the engine 11 is idling. If the engine 11 is idling, the ECU 61 computes the pilot injection compensation amount QP_{K,i} However, the processing of step S204 may be eliminated so that the pilot injection compensation amount QP_{K,i} is computed regardless of whether or not the engine 11 is idling. In this case, since step S204 need not be executed, the burden on the ECU 61 is reduced.

The fuel injection amount compensation of the first example may be combined with the pilot injection amount compensation of the second example. This would further enhance the injection of the appropriate amount of fuel into each combustion chamber 18.

In the first example, if the combustion of fuel in each cylinder #1-#4 takes place in a satisfactory state, the average combustion time TAV_{K,i} of each cylinder #1-#4 need not be the same.

In the second example, if the combustion of fuel in each cylinder #1-#4 takes place in a satisfactory state, the average ignition timing TMAV_{K,i} of each cylinder #1-#4 need not be the same.

## Claims

1. An apparatus for controlling fuel injection in a diesel engine including a plurality of cylinders (#1, #2, #3, #4), each cylinder (#1-#4) having a combustion chamber (18), the apparatus comprising:
the combustion chamber (18), wherein air supplied into the combustion chamber (18) is compressed and heated;
an injector (18a) for injecting fuel into the combustion chamber (18) to burn fuel by heat generated in the combustion chamber (18), wherein ions are formed when fuel is burned in the combustion chamber (18);
a detector (53) for detecting electric current, which is produced based on the ions in the combustion chamber (18), wherein the time during which the detector (53) detects electric current corresponds to the actual combustion time of fuel (TACTLK) in the combustion chamber (18); and
an electronic control unit (61) for controlling the injector (18a) according to the electric current detected by said detector (53),
**characterized in that**
the electronic control unit (61) computes an amount of fuel (Qbse) to be injected from the injector (18a) based on the operation state of the engine;
the electronic control unit (61) computes the most recent average combustion time of fuel (TAVK,i) in each combustion chamber (18) based on the most recent actual combustion time (TACTLK) and the previous average combustion time of fuel (TAVK,i-1) in the corresponding combustion chamber (18), wherein the electronic control unit (61) adds the most recent average combustion time of fuel (TAVK,i) in each combustion chamber (18) and divides the sum by the number of combustion chambers (18) to compute the total average combustion time, which is employed as a target combustion time of fuel (TAVTOT) in the combustion chamber (18); and
the electronic control unit (61) corrects the computed fuel injection amount (Qbse) such that the actual combustion time (TACTLK) approaches the target combustion time (TAVTOT) to optimize the actual amount of fuel injected from the injector (18a).

2. The apparatus according to claim 1, wherein the electronic control unit (61) computes a most recent compensation amount (QK,i) used for correcting the fuel injection amount (Qbse) in each combustion chamber (18) based on the difference between the target combustion time (TAVTOT) and the most recent average combustion time of fuel (TAVK,i) and the previous compensation amount (QK,i-1).

3. The apparatus according to claim 2, wherein the electronic control unit (61) computes the most recent compensation amount (QK,i) only when the fluctuation of the operation state of the engine is small, and wherein the electronic control unit (61) uses the previous compensation amount to correct the fuel injection amount (Qbse) when the operation state of the engine is changing rapidly.

## Patentansprüche

1. Vorrichtung zur Steuerung einer Kraftstoffeinspritzung in einem Dieselmotor mit einer Vielzahl von Zylindern (#1, #2, #3, #4), wobei jeder Zylinder (#1, #2, #3, #4) eine Brennkammer (18) hat und die Vorrichtung Folgendes umfasst:
die Brennkammer (18), wobei in die Brennkammer (18) eingespeiste Luft komprimiert und erhitzt wird;
eine Einspritzdüse (18a) zum Einspritzen von Kraftstoff in die Brennkammer (18), um Kraftstoff durch in der Brennkammer (18) erzeugte Hitze zu verbrennen, wobei Ionen gebildet werden, wenn Kraftstoff in der Brennkammer (18) verbrennt;
einen Detektor (53) zur Erfassung elektrischen Stroms, der auf den Ionen in der Brennkammer (18) basierend erzeugt wird, wobei die Dauer, während der der Detektor (53) elektrischen Strom erfasst, der tatsächlichen Verbrennungsdauer von Kraftstoff (TACTLK) in der Brennkammer (18) entspricht; und
eine elektronische Steuerungseinheit (61) zur Steuerung der Einspritzdüse (18a) gemäß dem von dem Detektor (53) erfassten elektrischen Strom,
**dadurch gekennzeichnet, dass**
die elektronische Steuerungseinheit (61) basierend auf dem Betriebszustand des Motors eine von der Einspritzdüse (18a) einzuspritzende Kraftstoffmenge (Qbse) berechnet;
die elektronische Steuerungseinheit (61) die letzte durchschnittliche Verbrennungsdauer von Kraftstoff (TAVK,i) in jeder Brennkammer (18) basierend auf der letzten tatsächlichen Verbrennungsdauer (TACTLK) und der vorherigen durchschnittlichen Verbrennungsdauer von Kraftstoff (TAVK,i-1) in der entsprechenden Brennkammer (18) berechnet, wobei die elektronische Steuerungseinheit (61) die letzte durchschnittliche Verbrennungsdauer von Kraftstoff (TAVK,i) in jeder Brennkammer (18) aufrechnet und die Summe durch die Anzahl an Brennkammern (18) teilt, um die gesamte durchschnittliche Verbrennungsdauer zu berechnen, die als eine Zielverbrennungsdauer von Kraftstoff (TAVTOT) in der Brennkammer (18) eingesetzt wird; und
die elektronische Steuerungseinheit (61) die berechnete Kraftstoffeinspritzmenge (Qbse) derart korrigiert, dass die tatsächliche Verbrennungsdauer (TACTLK) an die Zielverbrennungsdauer (TAVTOT) herankommt, um die die von der Einspritzdüse (18a) eingespritzte tatsächliche Kraftstoffmenge zu optimieren.

2. Vorrichtung nach Anspruch 1, bei der die elektronische Steuerungseinheit (61) eine letzte Ausgleichsmenge (QK,i), die zur Korrektur der Kraftstoffeinspritzmenge (Qbse) in jeder Brennkammer (18) verwendet wird, basierend auf der Differenz zwischen der Zielverbrennungsdauer (TAVTOT) und der letzten durchschnittlichen Verbrennungsdauer von Kraftstoff (TAVK,i) sowie der vorherigen Ausgleichsmenge (QK,i-1) berechnet.

3. Vorrichtung nach Anspruch 2, bei der die elektronische Steuerungseinheit (61) die letzte Ausgleichsmenge (QK,i) nur dann berechnet, wenn die Schwankung des Betriebszustands des Motors gering ist, und bei der die elektronische Steuerungseinheit (61) die vorherige Ausgleichsmenge verwendet, um die Kraftstoffeinspritzmenge (Qbse) zu korrigieren, wenn sich der Betriebszustand des Motors rasch ändert.

## Revendications

1. Appareil visant à commander une injection de carburant dans un moteur diesel comportant une pluralité de cylindres (#1, #2, #3, #4), chaque cylindre (#1-#4) ayant une chambre de combustion (18), l'appareil comprenant:
la chambre de combustion (18), dans laquelle l'air alimenté dans la chambre de combustion (18) est comprimé et chauffé;
un injecteur (18a) visant à injecter du carburant dans la chambre de combustion (18) afin de bruler le carburant par la chaleur générée dans la chambre de combustion (18), où des ions sont formés lorsque le carburant est brulé dans la chambre de combustion (18);
un détecteur (53) visant à détecter du courant électrique, qui est produit sur la base des ions dans la chambre de combustion (18), où le délai durant lequel le détecteur (53) détecte du courant électrique correspond au délai de combustion effectif de carburant (TACTLK) dans la chambre de combustion (18) ; et
une unité de commande électronique (61) visant à commander l'injecteur (18a) selon le courant électrique détecté par ledit détecteur (53),
**caractérisé en ce que**
l'unité de commande électronique (61) calcule une quantité de carburant (Qbse) à injecter à partir de l'injecteur (18a) sur la base de l'état de fonctionnement du moteur ;
l'unité de commande électronique (61) calcule le délai moyen de combustion le plus récent du carburant (TAVK, i) dans chaque chambre de combustion (18) sur la base du délai de combustion effectif le plus récent (TACTLK) et du délai moyen précédent de combustion du carburant (TAVK, i-1) dans la chambre de combustion correspondante (18), où l'unité de commande électronique (61) ajoute le délai moyen de combustion le plus récent du carburant (TAVK, i) dans chaque chambre de combustion (18) et divise la somme par le nombre de chambres de combustion (18) pour calculer le délai moyen total de combustion, qui est utilisé comme délai de combustion cible du carburant (TAVTOT) dans la chambre de combustion (18) ; et
l'unité de commande électronique (61) corrige la quantité d'injection de carburant calculée (Qbse) de sorte que le délai de combustion effectif (TACTLK) s'approche du délai de combustion cible (TAVTOT) pour optimiser la quantité effective de carburant injecté à partir de l'injecteur (18a).

2. Appareil selon la revendication 1, dans lequel l'unité de commande électronique (61) calcule la quantité de compensation la plus récente (QK, i) utilisée pour corriger la quantité d'injection de carburant (Qbse) dans chaque chambre de combustion (18) sur la base de la différence entre le délai de combustion cible (TAVTOT) et le délai moyen de combustion le plus récent du carburant (TAVK, i) et la quantité de compensation précédente (QK, i-1).

3. Appareil selon la revendication 2, dans lequel l'unité de commande électronique (61) calcule la quantité de compensation la plus récente (QK, i) uniquement lorsque la fluctuation de l'état de fonctionnement du moteur est petite, et où l'unité de commande électronique (61) utilise la quantité de compensation précédente pour corriger la quantité d'injection de carburant (Qbse) lorsque l'état de fonctionnement du moteur change rapidement.
